# EUROPÄISCHE PATENTSCHRIFT

(11) **EP 3 990 887 B1**
(45) Veröffentlichungstag und Bekanntmachung des Hinweises auf die Patenterteilung: **28.06.2023**
(21) Anmeldenummer: 20718665.1
(22) Anmeldetag: 14.04.2020
(51) Int. Cl.: G01N 15/02, G01N 15/06, G01N 15/14, G01N 21/19, G01N 21/21, G01N 15/00, G01N 15/10

(54) **SENSORANORDNUNG ZUR CHARAKTERISIERUNG VON PARTIKELN**
SENSOR ASSEMBLY FOR CHARACTERISING PARTICLES
ENSEMBLE CAPTEUR DESTINÉ À LA CARACTÉRISATION DE PARTICULES

(30) Priorität: 26.06.2019 DE 102019209213
(43) Veröffentlichungstag der Anmeldung: 04.05.2022
(73) Patentinhaber: Q.ant GmbH, 70565 Stuttgart (DE)
(72) Erfinder: FOERTSCH, Michael, 91522 Ansbach (DE); HENGESBACH, Stefan, 70469 Stuttgart (DE)
(74) Vertreter: Trumpf Patentabteilung
(86) Internationale Anmeldenummer: PCT/EP2020/060392
(87) Internationale Veröffentlichungsnummer: WO 2020/259889

(56) Entgegenhaltungen:
- US-A- 4 854 705
- US-A- 5 455 675
- US-A- 5 515 163
- US-A- 6 011 626

## Beschreibung

Die Erfindung betrifft eine Sensoranordnung zur Charakterisierung von Partikeln, insbesondere zur Bestimmung einer Partikel-Position, einer Partikel-Geschwindigkeit, einer Partikel-Beschleunigung und/oder einer Partikel-Größe, umfassend: einen Sender mit: einer Laserquelle zur Erzeugung eines Laserstrahls, einer Fokussieroptik zur Fokussierung einer Feldverteilung des Laserstrahls auf mindestens einen Messbereich in einer Fokusebene, der von den Partikeln durchlaufen wird, sowie einen Empfänger. Die Erfindung betrifft auch eine optische Anordnung, beispielsweise für eine EUV-Strahlungserzeugungsvorrichtung, mit einer solchen Sensoranordnung.

Eine Sensoranordnung der weiter oben beschriebenen Art ist in der US 4854705A offenbart. Bei der dort beschriebenen Sensoranordnung werden zwei Lichtstrahlen erzeugt und in einem gemeinsamen Fokusbereich fokussiert.

In der US 6011626A ist die Charakterisierung von stark streuenden Medien durch die Messung von diffus zurückgestreutem polarisiertem Licht beschrieben.

In der US 5455675A ist eine Vorrichtung zur Bestimmung von Partikelgrößen beschrieben. Dort wird ein Lichtstrahl in einen Messbereich eingestrahlt und an den Partikeln gebeugtes Licht wird von einem Photodetektor detektiert.

In der US 5515163A ist Verfahren zu Detektion von Partikeln beschrieben, bei dem zwei in Intensität und Phase modulierte Laserstrahlen verwendet werden. Das an den Partikeln gestreute Licht wird detektiert und synchron demoduliert.

Die Charakterisierung von Partikeln bzw. von Partikelströmen, beispielsweise der Größe / dem Volumen von Partikeln, deren Position bzw. Trajektorie sowie deren Geschwindigkeit bzw. Flugrichtung ist für viele Branchen, wie Chemie-, Pharma- oder Halbleiterindustrie von hoher Relevanz. Insbesondere, wenn die Partikel klein sind, d.h. bei Partikel-Größen im Nano- und Mikrometer-Bereich, und wenn die Partikel mit hoher Frequenz strömen, stoßen etablierte Sensor-Systeme an ihre Grenzen. Bewegen sich die Partikel zudem in Flüssigkeiten, ist eine Charakterisierung von Partikeln mit sehr hohem Aufwand verbunden.

### Aufgabe der Erfindung

Der Erfindung liegt die Aufgabe zugrunde, eine Sensoranordnung bereitzustellen, die zur Charakterisierung von Partikeln in unterschiedlichen Arten von Medien, insbesondere in Echtzeit, einsetzbar ist.

### Gegenstand der Erfindung

Diese Aufgabe wird gelöst durch eine Sensoranordnung der eingangs genannten Art, bei welcher der Sender zusätzlich eine Moden-Konversionseinrichtung zur Erzeugung der Feldverteilung des Laserstrahls umfasst, die an jeder Position eine unterschiedliche Kombination einer lokalen Intensität und einer lokalen Polarisationsrichtung aufweist, und bei welcher der Empfänger eine Analysator-Optik zur Ermittlung von polarisationsabhängigen Intensitätssignalen der Feldverteilung des Laserstrahls in dem mindestens einen Messbereich, sowie eine Auswerteeinrichtung zur Charakterisierung der Partikel, insbesondere zur Bestimmung der Partikel-Position, der Partikel-Geschwindigkeit, der Partikel-Beschleunigung und/oder der Partikel-Größe, anhand der polarisationsabhängigen Intensitätssignale, insbesondere anhand eines zeitlichen Verlaufs der Intensitätssignale, umfasst.

Die hier beschriebene Sensoranordnung basiert auf der Erzeugung einer Feldverteilung bzw. von optischen Moden, welche eine eindeutige Korrelation zwischen der lokalen Intensitätsverteilung und der lokalen Polarisationsrichtung aufweisen. Ein Partikel, welcher sich durch den Messbereich in Form einer solchen optischen Mode bewegt, ruft eine zeitliche Änderung sowohl der Intensität als auch der Polarisation der Feldverteilung hervor. Durch die eindeutige Zuordenbarkeit einer jeweiligen Polarisations-/Intensitätskombination zu genau einem Teilbereich bzw. zu genau einer Position der optischen Mode lässt sich die (momentane) Partikel-Position und anhand des zeitlichen Verlaufs der Intensitätssignale auch der zeitlichen Verlauf des Partikels, d.h. die Partikel-Trajektorie, bestimmen, d.h. die Auswerteeinrichtung ist ausgebildet, auf die Raumkoordinaten bzw. auf die Trajektorie zurückzurechnen. Anhand des zeitlichen Verlaufs der Intensitätssignale lässt sich auch die (momentane) Partikel-Geschwindigkeit bzw. deren zeitlicher Verlauf bestimmen. Ebenso kann die Partikel-Größe bzw. deren zeitlicher Verlauf bestimmt werden. Unter der Partikel-Größe wird im Sinne dieser Anmeldung die Querschnittsfläche eines Partikels in der Fokusebene verstanden. Die Charakterisierung der Partikel kann bei der Sensoranordnung mit hoher Geschwindigkeit im Gigahertz-Bereich erfolgen, d.h. die Detektion bzw. die Charakterisierung der Partikel kann in Echtzeit erfolgen.

Der Sender umfasst sowohl die Laserquelle als auch die Moden-Konversionseinrichtung. Als Laserquelle ist grundsätzlich jede Art von Laser geeignet. Als Laserquelle kann beispielsweise eine Laserdiode mit einer Laser-Wellenlänge von 1550 nm und einer optischen Leistung von 100 mW verwendet werden. Eine solche Laserquelle kann ohne Einschränkung auf das Grundprinzip der Sensoranordnung durch einen Laser mit einer anderen Laser-Wellenlänge ersetzt werden. Die Sensoranordnung bzw. die verwendete Mess-Methode lässt sich daher bei jeder verfügbaren Laser-Wellenlänge und Kombinationen mehrerer Laser-Wellenlängen umsetzen, auch außerhalb des sichtbaren Spektrums. Daher kann die Sensoranordnung zur Charakterisierung von Partikeln in einer Vielzahl von unterschiedlichen Medien (gasförmig, flüssig oder fest) verwendet werden. Das transversale Modenprofil des von der Laserquelle erzeugten Laserstrahls ist in der Regel TEM₀₀, die Laserquelle kann ggf. aber auch ein anderes Modenprofil erzeugen.

Der Laserstrahl kann im Sender mittels einer Fokussieroptik, die mindestens ein fokussierendes optisches Element, z.B. in Form einer Linse, aufweist, in die Fokusebene fokussiert werden, wobei die von der Moden-Konversionseinrichtung erzeugte Feldverteilung in die Fokusebene abgebildet wird. Der Laserstrahl kann von der Fokussieroptik kollimiert und optional durch ein Teleskop aufgeweitet werden, um den Strahlquerschnitt an die im Strahlweg nachfolgende Moden-Konversionseinrichtung anzupassen, sodass diese optimal ausgeleuchtet wird. Die Brennweite des fokussierenden optischen Elements ist an einen gewünschten, hinreichend großen Arbeitsabstand zwischen dem Sender und dem Partikelstrom bzw. den zu charakterisierenden Partikeln angepasst oder ggf. anpassbar. Der Messbereich in der Fokusebene bildet eine Art "virtuelle Sensorfläche", die eine Remote-Charakterisierung der Partikel ermöglicht, ohne den Sensor in der Fokusebene bzw. am Ort der Partikel positionieren zu müssen. Die Fokussieroptik kann ein Retrofokus-Objektiv aufweisen. Die Fokussieroptik kann auch eine Zoom-Optik zum Einstellen der Fokusgröße in die Fokusebene aufweisen.

Bei einer Ausführungsform ist die Moden-Konversionseinrichtung zur Erzeugung einer Feldverteilung des Laserstrahls mit radialsymmetrischer Polarisationsrichtung oder zur Erzeugung einer Feldverteilung mit linienförmig konstanter Polarisationsrichtung ausgebildet. Wie weiter oben beschrieben wurde, basiert der Partikelsensor auf der inhärenten Verschränkung der optischen Transversal- und der optischen Polarisationsmode des Feldverteilung bzw. des transversalen Strahlprofils (d.h. senkrecht zur Ausbreitungsrichtung des Laserstrahls). Die Moden-Konversionseinrichtung ist ausgebildet, dem Laserstrahl (a) eine zusätzliche transversale Phase aufzuprägen und (b) die örtliche Polarisation des Laserstrahls lokal zu verändern. Auf diese Weise entsteht bei der Fokussierung in der Fokusebene eine elektromagnetische Feldverteilung, bei der jede Kombination aus (a) Amplitude / Intensität und (b) Richtung des Polarisationsvektors (entsprechend der Polarisationsrichtung) nur an einer eindeutig festgelegten transversalen Position des Strahlprofils vorliegt. Ein Beispiel für eine solche Feldverteilung ist eine Radialpolarisation, d.h. eine radialsymmetrische Polarisationsverteilung, welche durch die Superposition einer TEM01 und einer TEM10 Mode beschrieben wird. Ein weiteres Beispiel stellt eine Feldverteilung dar, die eine radiale Polarisation aufweist, und bei der die Intensität in einer Richtung kontinuierlich ansteigt. Auf diese Weise hat jeder Punkt auf einer Linie eine unterschiedliche Intensität, so dass sich die Kombination aus Intensität und Polarisationsrichtung eindeutig einem Punkt zuordnen lässt. Punkte auf unterschiedlichen Linien weisen eine unterschiedliche Polarisationsrichtung auf und können daher ebenfalls voneinander unterschieden werden.

Bei einer weiteren Ausführungsform ist die Moden-Konversionseinrichtung als (ggf. segmentierte) Phasenplatte, als diffraktives optisches Element, als photonische Kristallfaser oder als Flüssigkristall ausgebildet. Grundsätzlich ist es möglich, die Aufprägung der transversalen Phase und die lokale Veränderung der Polarisation an unterschiedlichen optischen Elementen durchzuführen. In der Regel ist es jedoch günstig, sowohl die Veränderung der Phase als auch der Polarisation an ein- und demselben optischen Element vorzunehmen, was beispielsweise durch die weiter oben beschriebenen Arten von optischen Elementen ermöglicht wird.

Bei einer weiteren Ausführungsform ist die Laserquelle zur Erzeugung eines gepulsten Laserstrahls, bevorzugt mit einer Pulsdauer von weniger als 1 ns, ausgebildet. Grundsätzlich kann die Laserquelle zur Erzeugung von Dauerstrich-Strahlung (cw-Strahlung) ausgebildet sein. Bei der hier beschriebenen Ausführungsform handelt es sich bei der Laserquelle um eine gepulste Laserquelle bzw. um ein gepulstes Lasersystem, z.B. um einen Ultrakurzpuls-Laser, mit dem Laserpulse mit Pulsdauern im Pikosekunden-Bereich erzeugt werden können. Der gepulste Laserstrahl kann dazu verwendet werden, um den Messbereich bzw. die virtuelle Sensorfläche in der Fokusebene zu vergrößern, wie nachfolgend näher beschrieben wird. Es versteht sich, dass auch eine Laserquelle eingesetzt werden kann, die zwischen einer Betriebsart mit Dauerstrich-Strahlung und einer Betriebsart mit gepulster Laserstrahlung umgeschaltet werden kann.

Bei einer weiteren Ausführungsform weist der Sender eine im Strahlweg nach der Moden-Konversionseinrichtung angeordnete Strahlteiler-Einrichtung zur Aufteilung des Laserstrahls auf eine Mehrzahl von Teilstrahlen mit der von der Moden-Konversionseinrichtung erzeugten Feldverteilung auf, die Fokussieroptik ist zur Fokussierung der Mehrzahl von Teilstrahlen in einer Mehrzahl von Messbereichen in der Fokusebene ausgebildet. Bevorzugt weist der Empfänger eine (optische) Verzögerungseinrichtung zum Verzögern der Mehrzahl von Teilstrahlen mit jeweils unterschiedlicher Verzögerungsdauer auf. In diesem Fall wird die virtuelle Sensorfläche in der Fokusebene vergrößert, indem eine Mehrzahl von Messbereichen räumlich nebeneinander erzeugt wird.

Zu diesem Zweck wird mittels einer Strahlteiler-Einrichtung der Laserstrahl auf eine gewünschte Mehrzahl von Teilstrahlen aufgeteilt, die jeweils dieselbe, von der Moden-Konversionseinrichtung erzeugte Feldverteilung aufweisen. Die Fokussieroptik fokussiert die Teilstrahlen auf einer Mehrzahl von Messbereichen in der Fokusebene, und zwar in der Regel in einer regelmäßigen Anordnung, d.h. in einem Raster bzw. Array mit einer Anzahl von N x M Messbereichen, die in N Zeilen und in M Spalten angeordnet sind. Die Fokussieroptik kann zu diesem Zweck beispielsweise eine Mehrzahl von Fokussierlinsen bzw. eines oder mehrere Linsen-Arrays aufweisen.

Es ist, möglich, eine der Anzahl von N x M Teilstrahlen entsprechende Anzahl von Analysator-Optiken bzw. von Empfängern in der Sensoranordnung vorzusehen. In diesem Fall kann auf eine (optische) Verzögerungseinrichtung verzichtet werden bzw. diese kann durch eine rein elektronische Verzögerung der Intensitätssignale der Analysator-Optiken ersetzt werden, sofern eine solche Verzögerung überhaupt benötigt wird.

Die Verzögerungseinrichtung im Empfänger dient dazu, die polarisationsabhängigen Intensitätssignale, welche einen jeweiligen Messbereich durchlaufen haben, bzw. die Teilstrahlen mit unterschiedlichen Verzögerungsdauern zeitlich so verzögern, so dass die gepulsten Teilstrahlen, die von unterschiedlichen Messbereichen ausgehen, zu unterschiedlichen Zeitpunkten in die Analysator-Optik eintreten und auf die dort vorhandenen optischen Detektoren treffen. Die Verzögerungseinrichtung ermöglicht die unterschiedliche Verzögerung in der Regel durch die Erzeugung einer unterschiedlichen optischen Weglänge der jeweiligen Teilstrahlen zu der Analysator-Optik. Durch die (optische) Verzögerungseinrichtung kann die Mehrzahl von Teilstrahlen mit Hilfe einer einzigen Analysator-Optik ausgewertet werden.

Durch die unterschiedliche Verzögerung kann die räumliche Auflösung durch die unterschiedlichen Messbereiche in eine zeitliche Auflösung bzw. in ein zeitlich variierendes Signal transformiert werden (zeitliches Multiplexing). Um die Zuordnung der von den jeweiligen gepulsten Teilstrahlen erzeugten, zeitlich variierenden Signale bzw. Polarisations-Parameter zu erleichtern, kann ein Triggerwert erzeugt werden, beispielsweise indem ein vollständig absorbierender Messbereich verwendet wird bzw. einer der Teilstrahlen auf eine Weise moduliert wird, der eine eindeutige Zuordnung der von der Analysator-Optik ermittelten polarisationsabhängigen Intensitätssignale zu dem Messbereich zulässt, welcher für die Erzeugung des Triggerwerts bzw. Triggersignals verwendet wird.

Bei einer Weiterbildung weist die Strahlteiler-Einrichtung ein diffraktives optisches Element und/oder mindestens ein Mikrolinsen-Array zur Erzeugung der Mehrzahl von Teilstrahlen mit gleichen Wellenlängen auf. Bei dieser Ausführungsform wird der Laserstrahl an dem diffraktiven optischen Element in mehrere Teilstrahlen aufgeteilt, die jeweils (annähernd) die gleiche Wellenlänge aufweisen. Die räumlich separierten Teilstrahlen werden nachfolgend mittels mindestens eines optischen Elements der Verzögerungseinrichtung, z.B. mittels einer Glas- oder einer Keilplatte, unterschiedlich stark verzögert.

Bei einer alternativen Weiterbildung weist die Strahlteiler-Einrichtung ein diffraktives optisches Element zur Erzeugung einer Mehrzahl von Teilstrahlen mit unterschiedlichen Wellenlängen auf und die Verzögerungseinrichtung ist bevorzugt als diffraktives oder dispersives optisches Element zur Verzögerung der Teilstrahlen mit unterschiedlichen Wellenlängen mit jeweils unterschiedlicher Verzögerungsdauer ausgebildet. In diesem Fall weisen die jeweiligen Teilstrahlen eine unterschiedliche Wellenlänge auf und können mittels eines diffraktiven optischen Elements, z.B. eines Reflexions- oder Transmissions-Gitters oder eines dispersiven optischen Elements räumlich aufgeteilt und durch entsprechende Verzögerungsstrecken, wie unterschiedlich lange Glasfaserkabel zum Multiplexen, zeitlich unterschiedlich stark verzögert werden.

Grundsätzlich kann die Verzögerungseinrichtung auch refraktive optische Elemente bzw. optische Elemente wie Umlenkspiegel, Keilplatten, Prismen oder dergleichen aufweisen, um die Teilstrahlen unterschiedlich stark zu verzögern, typischerweise bevor diese in die Analysator-Optik des Empfängers eintreten. Zur räumlichen Überlagerung der Teilstrahlen vor dem Eintritt in die Analysator-Optik können refraktive optische Elemente mit Antireflex-Beschichtungen mit einem wellenlängenabhängigen Reflexionsgrad versehen sein oder Gradienten in der Antireflex-Beschichtung aufweisen, so dass Teilstrahlen mit unterschiedlichen Wellenlängen überlagert werden.

Der Empfänger umfasst in der Regel eine Kollimations-Optik zur Kollimierung des Laserstrahls bzw. der Teilstrahlen des Laserstrahls vor dem Eintritt in die Analysator-Optik. Die Analysator-Optik, die zur Ermittlung der polarisationsabhängigen, d.h. von der Polarisationsrichtung abhängigen Intensitäten (bzw. äquivalent dazu der jeweiligen Leistung) dient, kann auf unterschiedliche Weise ausgebildet werden. Die Analysator-Optik weist zu diesem Zweck mindestens einen in der Regel nicht ortsauflösenden Detektor auf, der beispielsweise in Form einer Photodiode, z.B. einer PIN-Diode, ausgebildet sein kann. Zur Ermittlung von zwei oder mehr Intensitäten bei unterschiedlichen (linearen) Polarisationsrichtungen kann die Analysator-Optik beispielsweise einen fest stehenden Polarisator und eine polarisationsdrehende Einrichtung, z.B. in Form einer rotierenden λ/2-Verzögerungsplatte, aufweisen. Die Verwendung von bewegbaren optischen Elementen ist aber für eine schnelle Auswertung mit Frequenzen im GHz-Bereich unvorteilhaft. Es ist daher günstig, wenn die Analysator-Optik keine beweglichen optischen Elemente aufweist.

Bei einer Ausführungsform umfasst die Analysator-Optik einen (geometrischen) Strahlteiler zur Aufteilung eines Strahlengangs der Analysator-Optik auf einen ersten und zweiten Detektions-Strahlengang. Der geometrische Strahlteiler kann beispielsweise in der Art eines Strahlteiler-Würfels oder dergleichen ausgebildet sein und dazu dienen, die Leistung des Laserstrahls in einem fest vorgegebenen Verhältnis (z.B. 50 : 50) auf die beiden Detektions-Strahlengänge aufzuteilen.

Bei einer Weiterbildung umfasst der erste Detektions-Strahlengang einen ersten Polarisations-Strahlteiler sowie einen ersten und zweiten optischen Detektor und der zweite Detektions-Strahlengang umfasst einen zweiten Polarisations-Strahlteiler sowie einen dritten und vierten optischen Detektor. Die optischen Detektoren, z.B. in Form von Fotodioden, z.B. von (kleinen) PIN-Dioden, ermöglichen Abtastraten bzw. Auflösungen von 10 GHz und mehr. Die Verwendung von vier Detektoren hat sich als günstig erwiesen, um aus den polarisationsabhängigen Intensitäten die Polarisations-Parameter (Stokes-Parameter) der Feldverteilung zu ermitteln, wie weiter unten näher beschrieben wird. Die optischen Detektoren sind an die Wellenlänge(n) des Laserstrahls bzw. der Teilstrahlen angepasst. Die optischen Detektoren bzw. die PIN-Dioden können als Freistrahl-Dioden oder als fasergekoppelte Dioden (Single- oder Multimode) ausgebildet sein. Letztere haben den Vorteil einer geringeren Beeinflussung durch Streulicht. Die eingesetzten Detektoren bestimmen die maximal mögliche zeitliche Auflösung bei der Abtastung.

Bei einer Weiterbildung weist die Analysator-Optik eine polarisationsdrehende Einrichtung zur Drehung einer Polarisationsrichtung des Laserstrahls (bzw. der jeweiligen Teilstrahlen des Laserstrahls) um 45° entweder vor dem ersten Polarisations-Strahlteiler oder vor dem zweiten Polarisations-Strahlteiler auf. Bei der polarisationsdrehenden Einrichtung kann es sich beispielsweise um eine geeignet orientierte λ/2-Verzögerungsplatte handeln. Zur Ermittlung der Polarisations-Parameter hat es sich als günstig erwiesen, wenn die vier Detektoren die Leistung bzw. die Intensität bei jeweils zwei senkrecht zueinander ausgerichteten Polarisationsrichtungen (0° und 90° bzw. 45° und 135°) detektieren. Die Drehung der Polarisationsrichtung um 45° zwischen den beiden Detektions-Strahlengängen vereinfacht die Ermittlung der Polarisations-Parameter aus den polarisationsabhängigen Intensitäten (s.u.). Mit Ausnahme der polarisationsdrehenden Einrichtung sind die beiden Detektions-Strahlengänge bzw. reflektierte und transmittierte Strahlanteile des Laserstrahls in der Analysator-Optik austauschbar.

Bei einer weiteren Weiterbildung ist eine optische Weglänge der Analysator-Optik von dem (geometrischen) Strahlteiler zu dem ersten bis vierten optischen Detektor gleich groß. Es hat sich als günstig erwiesen, wenn die optische Weglänge in der Analysator-Optik bzw. von dem Strahlteiler zu den Detektoren gleich lang ist, damit keine Laufzeit-Differenzen zwischen den polarisationsabhängigen Intensitätssignalen auftreten, die an den optischen Detektoren ermittelt werden. Für den Fall, dass nur ein Laserstrahl verwendet wird, ist nicht nur die optische Weglänge in der Analysator-Optik, sondern auch von der Fokusebene zu den vier Detektoren gleich groß.

Bei einer weiteren Ausführungsform ist die Auswerteeinrichtung zur Bildung eines Summen-Signals und/oder eines Differenz-Signals aus den ermittelten polarisationsabhängigen Intensitäten des ersten und zweiten Detektors und/oder zur Bildung eines weiteren Summen-Signals und/oder eines weiteren Differenz-Signals aus den ermittelten polarisationsabhängigen Intensitäten des dritten und vierten Detektors ausgebildet. Die Auswerteeinrichtung ist ausgebildet, aus den polarisationsabhängigen Intensitäten des ersten und zweiten bzw. des dritten und vierten Detektors ein Summen- bzw. ein Differenz-Signal zu erzeugen. Aus der Summe bzw. der Differenz zwischen jeweils zwei Intensitäten, die in zwei orthogonal ausgerichteten Polarisationsrichtungen ermittelt wurden, können die Polarisations-Parameter der Feldverteilung in dem Messbereich bestimmt werden. Bei den Polarisations-Parametern handelt es sich in der Regel um zwei oder mehr der so genannten Stokes-Parameter, es können aber grundsätzlich auch andere Parameter bestimmt werden, welche den Polarisationszustand der Feldverteilung in dem Messbereich beschreiben. Anhand der Summen- und Differenzsignale können die Partikel-Position bzw. die Partikel-Geschwindigkeit und die Partikel-Größe gleichzeitig bestimmt werden.

Die Bildung der Summen- bzw. Differenz-Signale in der Auswerteeinrichtung kann in einer Auslese-Elektronik passiv über Richtkoppler erfolgen, oder aktiv über elektronische Verstärker (Operationsverstärker), um das Signal-zu-RauschVerhältnis und damit die Auflösung der Sensoranordnung zu vergrößern. Die Geschwindigkeit der Auslese-Elektronik ist an die Bandbreite der Fotodioden angepasst. Die Auslese-Elektronik der Auswerteeinrichtung ist in den Empfänger integriert. Der Rest der Auswerteeinrichtung kann ebenfalls in den Empfänger bzw. in einem Gehäuse des Empfängers untergebracht sein, es ist aber auch möglich, dass ein Teil der Auswerteeinrichtung über eine Schnittstelle mit dem Empfänger in Verbindung steht, beispielsweise wenn die Berechnungen auf einem Auswerte-Computer oder dergleichen durchgeführt werden.

Bei einer Weiterbildung ist die Auswerteeinrichtung ausgebildet, aus dem Summen-Signal und/oder aus dem weiteren Summen-Signal die Partikel-Größe zu berechnen. Aufgrund des vergleichsweise kleinen Messbereichs und der hohen Zeitauflösung bei der Auswertung kann vereinfachend davon ausgegangen werden, dass jeweils nur ein einzelner Partikel den Messbereich durchläuft, d.h. die ermittelten polarisationsabhängigen Intensitäten können eindeutig einem Partikel zugeordnet werden. Das Summen-Signal aus den polarisationsabhängigen Intensitäten, die an dem ersten und zweiten Detektor ermittelt werden, ist proportional zur Gesamt-Intensität des Laserstrahls, der den Messbereich durchlaufen hat (Stokes-Parameter s₀). Je kleiner die Gesamt-Intensität bzw. das Summen-Signal, desto stärker wird der Messbereich von dem Partikel abgeschattet, d.h. desto größer ist der Partikel bzw. dessen Querschnitt in der Fokusebene. Das Summen-Signal kann mit einem bzw. mit mehreren Schwellwerten verglichen werden, um die detektierten Partikel in ihrer Größe zu klassifizieren. Gegebenenfalls kann die Auslese-Elektronik zu diesem Zweck einen oder mehrere elektronische Komparatoren, ggf. mit einstellbarem Schwellwert, aufweisen. Mit Hilfe einer Kalibrierung bzw. durch Zuführen von Partikeln mit bekannter Partikel-Größe zu dem Messbereich kann die Größe der detektierten Partikel nicht nur relativ, sondern absolut bestimmt werden. Die Klassifizierung der Partikel nach ihrer Partikel-Größe bzw. nach ihrem Partikel-Querschnitt kann über ein großes Größen-Intervall von beispielsweise ca. 100 nm - 5000 nm erfolgen.

Bei einer weiteren Weiterbildung ist die Auswerteeinrichtung ausgebildet, anhand des Differenz-Signals und/oder anhand des weiteren Differenz-Signals die Partikel-Position, die Partikel-Geschwindigkeit und/oder die Partikel-Beschleunigung in der Fokusebene bzw. in dem Messbereich zu berechnen. Zu diesem Zweck kann der zeitliche Verlauf eines Differenz-Signals, in der Regel der zeitliche Verlauf von beiden Differenz-Signalen, ausgewertet werden, bei denen es sich um die beiden Stokes-Parameter s₁, s₂ handelt, welche die linearen Komponenten der Polarisation beschreiben. Zusätzlich kann zu diesem Zweck auch das Summen-Signal bzw. der Stokes-Parameter s₀ herangezogen werden. Aufgrund der Korrelation zwischen der Polarisations- und der Intensitätsverteilung der Feldverteilung in der Fokusebene kann die Partikel-Position in dem Messbereich und somit anhand des zeitlichen Verlaufs die Partikel-Trajektorie rekonstruiert werden. Zu diesem Zweck kann ggf. vorab jedem Stokes-Vektor s₀, s₁, s₂ eine Position in dem Messbereich zugeordnet und in einer Tabelle gespeichert werden. Anhand des zeitlichen Verlaufs bzw. der Veränderung des Stokes-Vektors s₀, s₁, s₂ kann auch die Geschwindigkeit sowie die Beschleunigung eines Partikels in dem Messbereich ermittelt werden.

Wie weiter oben in Zusammenhang mit der Berechnung der Partikel-Größe beschrieben wurde, können beispielsweise mit Hilfe von elektronischen Komparatoren, welche die Differenz-Signale mit ggf. einstellbaren Schwellwerten vergleichen, Abweichungen der Partikel-Trajektorie von einer Soll-Trajektorie detektiert werden. Für den Fall, dass die Abweichungen zu groß sind, kann ggf. steuernd oder regelnd in einen Prozess eingegriffen werden, bei dem die Partikel erzeugt bzw. die Partikel-Trajektorie vorgegeben wird. Bei der Soll-Trajektorie kann es sich insbesondere um eine vorgegebene, konstante Soll-Position des Partikels handeln, an welcher der Partikel gehalten werden soll. Durch die zeitliche Auflösung im GHz-Bereich können auch kleinste Abweichungen von einer solchen Soll-Position in Echtzeit bestimmt werden.

Mit Hilfe des Senders und des Empfängers können die Partikel-Position, die Partikel-Geschwindigkeit, die Partikel-Beschleunigung und/oder die Partikel-Größe in zwei Raumrichtungen in der Fokusebene bestimmt werden. Für die Charakterisierung der den Messbereich durchlaufenden Partikel in allen drei Raumrichtungen ist die Verwendung eines einzigen Paars aus Sender und Empfänger in der Regel nicht ausreichend.

Bei einer weiteren Ausführungsform umfasst die Sensoranordnung einen weiteren Sender zur Fokussierung eines weiteren Laserstrahls in einer weiteren Fokusebene, welche die Fokusebene in dem Messbereich kreuzt, sowie einen weiteren Empfänger zum Empfangen des weiteren Laserstrahls. Die Auswerteeinrichtung ist zur Bestimmung einer Partikel-Position, einer Partikel-Geschwindigkeit, einer Partikel-Beschleunigung und/oder einer Partikel-Größe in drei Raumrichtungen ausgebildet. Der weitere Sender und der weitere Empfänger können insbesondere baugleich zu dem weiter oben beschriebenen Sender und Empfänger ausgebildet sein und zur Bestimmung der Partikel-Position, der Partikel-Geschwindigkeit, der Partikel-Beschleunigung und/oder der Partikel-Größe in zwei Raumrichtungen in der weiteren Fokusebene ausgebildet sein. Da die weitere Fokusebene und die Fokusebene sich in dem Messbereich kreuzen, der von den Partikeln durchlaufen wird, stehen der Auswerteeinrichtung alle Informationen für die Charakterisierung der den Messbereich durchlaufenden Partikel in allen drei Raumrichtungen zur Verfügung. Es ist günstig, wenn die Fokusebene und die weitere Fokusebene senkrecht zueinander ausgerichtet sind.

Bei einer weiteren Ausführungsform weist der Sender ein Gehäuse mit einem Austrittsfenster auf und der Empfänger weist ein Gehäuse mit einem Eintrittsfenster auf, zwischen denen die Fokusebene gebildet ist. Die Gehäuse von Sender und Empfänger sind durch Fenster von den zu untersuchenden Partikeln und Medien hermetisch abgedichtet. Die projizierte Messfläche und die Bahnkurven der Partikel werden in der Fokusebene detektiert, die zwischen den beiden hermetisch abgeschlossenen Gehäusen liegt.

In einer weiteren Ausführungsform sind der Sender und der Empfänger, genauer gesagt deren Gehäuse, fest miteinander verbunden. Der Sender und der Empfänger können durch eine feste, nicht lösbare Verbindung miteinander verbunden sein, beispielsweise können der Sender und der Empfänger an einem C-Rahmen befestigt sein. Die feste Verbindung zwischen dem Sender und dem Empfänger kann auch lösbar ausgebildet sein, beispielsweise können der Sender und der Empfänger durch eine Steckverbindung fest miteinander verbunden sein. Die feste Verbindung stellt sicher, dass der Sender und der Empfänger in einem vorgegebenen Abstand zueinander angeordnet und wie gewünscht zueinander ausgerichtet sind, d.h. in der Regel mit parallel ausgerichtetem Eingangs- und Ausgangsfenster.

Alternativ sind der Sender und der Empfänger der Sensoranordnung nicht fest miteinander verbunden. In diesem Fall werden der Sender und der Empfänger initial zueinander ausgerichtet und in dieser Ausrichtung stabilisiert (passive Ausführung). Alternativ werden der Sender und der Empfänger nicht fest miteinander verbunden, aber es wird eine optische Verbindung bzw. eine Ausrichtung des Senders und des Empfängers relativ zueinander mittels einer aktiven Stabilisierung des Laserstrahls aufrechterhalten (aktive Ausführung) . Zur Stabilisierung des Laserstrahls kann beispielsweise die Veränderung des Summensignals aller Detektoren der Analysator-Optik in Kombination mit einer kleineren Abtastrate als die Partikel-Auslesefrequenz als Stabilitäts-Kriterium verwendet werden. In diesem Fall wird das Summensignal über eine deutlich längere Zeitdauer integriert als die Partikel-Auslesefrequenz. Durch die längere Integrationszeit wird in dem Summen-Signal die Langzeit-Drift zwischen dem Sender und dem Empfänger sichtbar, die z.B. aus einer thermischen Drift zwischen Sender und Empfänger resultiert. Durch eine geeignete Verschiebung und/oder Drehung von Sender und Empfänger relativ zueinander in Abhängigkeit von dem Summen-Signal als Stabilitäts-Kriterium kann die optische Verbindung bzw. die Ausrichtung zwischen Sender und Empfänger aufrechterhalten werden. Alternativ oder zusätzlich kann auch das Signal einer Kamera (s.u.) als Stabilitäts-Kriterium verwendet werden.

Bei einer weiteren Ausführungsform weist der Empfänger einen weiteren Strahlteiler zum Auskoppeln eines Strahlungsanteils des Laserstrahls auf einen ortsauflösenden Detektor, insbesondere auf eine Kamera, auf. Mit dem weiteren Strahlteiler kann ein beliebiger Leistungsanteil des Laserstrahls auf eine Kamera zur Prozessbeobachtung ausgekoppelt werden. Die Prozessbeobachtung kann u.a. zur initialen Ausrichtung der zu untersuchenden Partikel relativ zu dem Laserstrahl verwendet werden. Die weiter oben beschriebene aktive Stabilisierung der Ausrichtung von Sender und Empfänger kann auch mit Hilfe eines Ausgangssignals der Kamera realisiert werden, welches als Stabilitäts-Kriterium verwendet wird. Die Kamera kann in den Empfänger integriert sein. Alternativ kann der Empfänger ein Auskoppelfenster aufweisen, an dem der ausgekoppelte Strahlungsanteil in Richtung auf die Kamera aus dem Empfänger ausgekoppelt wird.

Ein weiterer Aspekt der Erfindung betrifft eine optische Anordnung, insbesondere für eine EUV-Strahlungserzeugungsvorrichtung, umfassend: eine Vakuum-Kammer, der Partikel zuführbar sind, sowie eine Sensoranordnung, die wie weiter oben beschrieben ausgebildet ist, zur Charakterisierung, insbesondere zur Bestimmung der Partikel-Position, der Partikel-Geschwindigkeit, der Partikel-Beschleunigung und/oder der Partikel-Größe, der Partikel in der Vakuum-Kammer. Wie weiter oben beschrieben wurde, kann die Sensoranordnung in einer Vielzahl von Anwendungsfeldern eingesetzt werden, um feste, flüssige oder gasförmige Partikel bzw. Partikelströme zu charakterisieren.

Beispielsweise kann die Sensoranordnung zur Charakterisierung von Partikeln bzw. von Partikelströmen in einer Vakuum-Kammer einer EUV-Strahlungserzeugungsvorrichtung verwendet werden. Eine solche EUV-Strahlungserzeugungsvorrichtung weist in der Regel eine Treiberlaseranordnung zur Erzeugung eines Treiber-Laserstrahls sowie eine Strahlzuführungseinrichtung zur Zuführung des Treiber-Laserstrahls zu der weiter oben beschriebenen Vakuum-Kammer auf. Der Treiber-Laserstrahl wird in einem Zielbereich der Vakuum-Kammer fokussiert, in der ein Target-Material in Form von Zinn-Partikeln bzw. von Zinn-Tröpfchen eingebracht ist. Ein jeweiliger Partikel geht bei der Bestrahlung mit dem Treiber-Laserstrahl in einen Plasma-Zustand über und emittiert hierbei EUV-Strahlung. Die Partikel des Target-Materials, welche zu dem Zielbereich geführt werden, sowie die Partikel, die beim Auftreffen des Laserstrahls auf das Target-Material (beim Zerstäuben des Target-Materials) erzeugt werden, können mit Hilfe der weiter oben beschriebenen Sensoranordnung charakterisiert werden. Es versteht sich, dass die Sensoranordnung auch zur Charakterisierung von Partikeln in anderen Anwendungsfeldern, z.B. zur Charakterisierung von Ruß-Partikeln, etc. eingesetzt werden kann.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1a: eine schematische Darstellung einer Sensoranordnung zur Charakterisierung von Partikeln, die einen Messbereich in einer Fokusebene zwischen einem Sender und einem Empfänger durchlaufen,
- Fig. 1b: eine schematische Darstellung einer Sensoranordnung analog zu Fig. 1a mit einem weiteren Sender und einem weiteren Empfänger,
- Fig. 2a,b: schematische Darstellungen einer Sensoranordnung, die zur Erzeugung einer Mehrzahl von Messbereichen in der Fokusebene ausgebildet ist,
- Fig. 3: eine schematische Darstellung einer EUV-Strahlungserzeugungsvorrichtung, die eine Sensoranordnung zur Charakterisierung von Partikeln in einer Vakuum-Kammer aufweist, sowie
- Fig. 4: eine schematische Darstellung von zwei Feldverteilungen, die von der einer Moden-Konversionseinrichtung erzeugt werden.

In der folgenden Beschreibung der Zeichnungen werden für gleiche bzw. funktionsgleiche Bauteile identische Bezugszeichen verwendet.

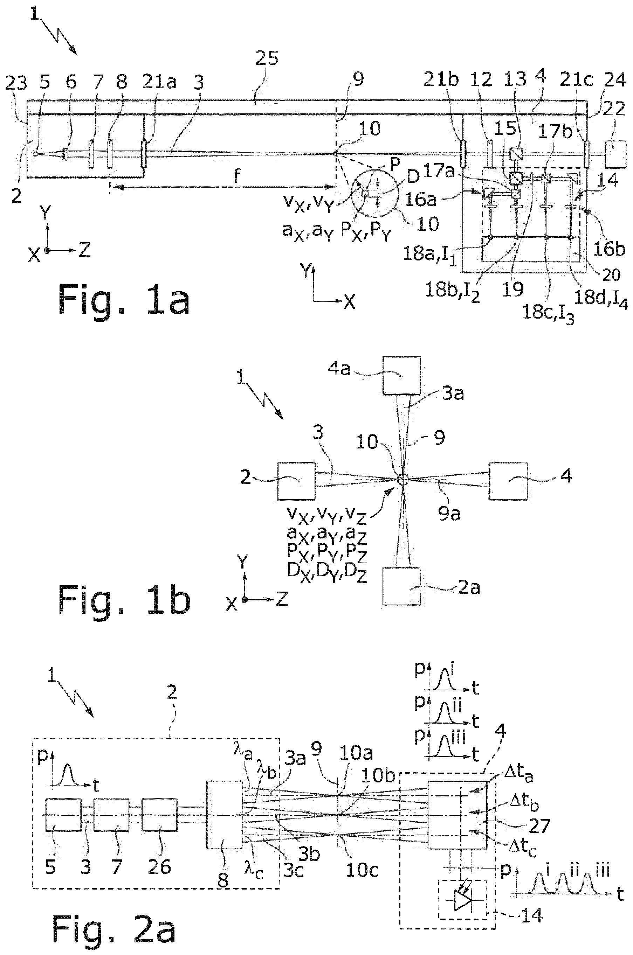

Fig. 1a zeigt schematisch ein Beispiel einer Sensoranordnung **1,** die einen Sender **2** zum Aussenden eines Laserstrahls **3** und einen Empfänger **4** zum Empfangen des Laserstrahls 3 aufweist. Der Sender 2 weist eine Laserquelle **5** zur Erzeugung des Laserstrahls 3 auf, bei der es sich im gezeigten Beispiel um einen Diodenlaser handelt, der eine Laser-Wellenlänge aufweist, die abhängig von der Anwendung aus einem Wellenlängen-Bereich zwischen ca. 180 nm und ca. 10000 nm ausgewählt ist. Im Strahlweg des Laserstrahls 3 folgt auf die Laserquelle 5 eine Kollimations-Optik in Form einer Kollimations-Linse **6** zur Kollimierung des Laserstrahls 3. Der kollimierte Laserstrahl 3 trifft nachfolgend auf eine Moden-Konversionseinrichtung **7** und wird mit einer nachfolgenden Fokussieroptik in Form einer Fokussierlinse **8** (mit Brennweite **f**) auf eine Fokusebene **9** fokussiert, und zwar auf einen Messbereich **10,** welcher der Fokuszone des Laserstrahls 3 in der Fokusebene 9 entspricht.

Die Sensoranordnung 1 dient zur Charakterisierung von Partikeln **P,** welche den Messbereich 10 durchlaufen, der in Fig. 1a in einer Detaildarstellung in der XY-Ebene senkrecht zur Ausbreitungsrichtung Z des Laserstrahls 3 dargestellt ist. Mit Hilfe der Sensoranordnung 1 kann eine Partikel-Position **P_{X}**, **P_{Y}**, eine Partikel-Geschwindigkeit **v_{X}**, **v_{Y}** und eine Partikel-Größe bzw. ein Partikel-Durchmesser **D** von Partikeln P bestimmt werden, welche den Messbereich 10 durchlaufen.

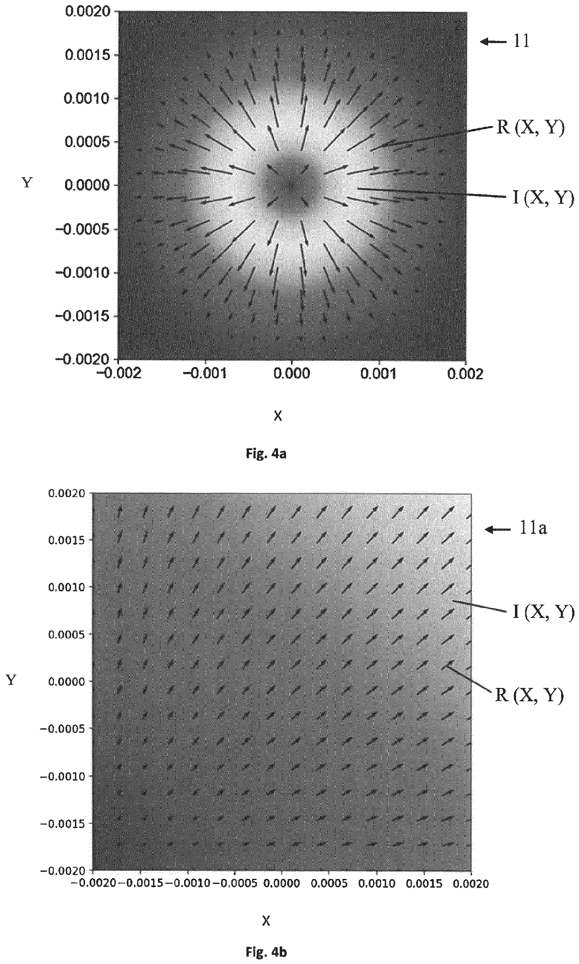

Um dies zu ermöglichen, erzeugt die Moden-Konversionseinrichtung 7, die im gezeigten Beispiel als segmentierte Phasenplatte ausgebildet ist, und die alternativ beispielsweise als photonische Kristallfaser, als Flüssigkristall oder als diffraktives optisches Element ausgebildet sein kann, eine Feldverteilung **11** in der Fokusebene 9, wie sie in **Fig. 4a** dargestellt ist. Die von der Moden-Konversionseinrichtung 7 erzeugte Feldverteilung 11 ist radialsymmetrisch polarisiert, d.h. eine lokale Polarisationsrichtung **R(X, Y)** der Feldverteilung 11 ist stets radial zum Zentrum des Strahlprofils des Laserstrahls 3 ausgerichtet. Die lokale Intensität **I(X, Y)** des Laserstrahls 3 in der Feldverteilung 11 bildet eine radialpolarisierte Mode. Die in Fig. 4a gezeigte Feldverteilung 11, welche eine Superposition einer TEM01 und einer TEM10 Mode darstellt, wird mit Hilfe der Moden-Konversionseinrichtung 7 aus einem TEM00-Modenprofil erzeugt, das der Laserstrahl 3 beim Austritt aus der Laserquelle 5 aufweist.

Die in Fig. 4a gezeigte Feldverteilung 11 weist die Besonderheit auf, dass diese an jeder Position X, Y der Feldverteilung 11 und somit des Messbereichs 10 eine unterschiedliche Kombination der lokalen Intensität I(X,Y) und der lokalen Polarisationsrichtung R(X,Y) aufweist, d.h. an keiner Position X, Y stimmen sowohl die Polarisationsrichtung R(X, Y) als auch die Intensität I(X, Y) der Feldverteilung 11 überein. Dies ermöglicht eine eindeutige Zuordnung jeder Position X, Y der Feldverteilung 11 zu genau einer Kombination aus Intensität I(X, Y) und Polarisationsrichtung R(X, Y).

Fig. 4b zeigt eine Feldverteilung **11a,** welche ebenfalls die in Zusammenhang mit Fig. 4a beschriebene Eigenschaft aufweist, dass jeder Position X, Y eindeutig eine Polarisations-/Intensitätskombination zugeordnet werden kann. Im Gegensatz zu der in Fig. 4a gezeigten Feldverteilung 11 verläuft bei der in Fig. 4b gezeigten Feldverteilung 11a die Polarisationsrichtung R(X, Y) radial. Die Intensität I(X,Y) nimmt über die Feldverteilung 11a entlang einer definierten Richtung kontinuierlich zu.

Die Eigenschaften der in Fig. 4a,b gezeigten Feldverteilungen 11, 11a können ausgenutzt werden, um die Partikel P auf die weiter oben beschriebene Weise zu charakterisieren, ohne hierbei eine ortsaufgelöste Messung durchführen zu müssen. Zu diesem Zweck wird der Laserstrahl 3 nach dem Durchlaufen des Messbereichs 10 zunächst von einer in dem Empfänger 4 angeordneten Kollimationsoptik in Form einer Kollimationslinse **12** kollimiert. Der kollimierte Laserstrahl 3 tritt über einen ersten geometrischen Strahlteiler **13** in eine Analysator-Optik **14** ein. An dem ersten Strahlteiler 13 wird ein Strahlungsanteil des Laserstrahls 3, beispielsweise von ca. 50% der Strahlungsleistung, ausgekoppelt und tritt nicht in die Analysator-Optik 14 ein. Die restlichen 50% der Strahlungsleistung des Laserstrahls 3 treffen auf einen zweiten geometrischen Strahlteiler **15,** an dem der Laserstrahl 3, genauer gesagt dessen Strahlungsleistung, ebenfalls im Verhältnis 50 : 50 auf einen ersten Detektions-Strahlengang **16a** und einen zweiten Detektions-Strahlengang **16b** aufgeteilt wird.

Im ersten Detektions-Strahlengang 16a trifft der von dem zweiten Strahlteiler 15 transmittierte Laserstrahl 3 auf einen ersten Polarisations-Strahlteiler **17a,** der den Laserstrahl 3 in zwei senkrecht zueinander linear polarisierte Anteile aufteilt. Von einem ersten Detektor **18a** wird hierbei die Intensität **I₁** von Laserstrahlung mit einem Polarisations-Winkel von 0° erfasst, während die Intensität I₂ der senkrecht dazu, d.h. mit einem Polarisationswinkel von 90°, polarisierten Laserstrahlung von einem zweiten Detektor **18b** erfasst wird. Im zweiten Detektions-Strahlengang 16b trifft der vom zweiten Strahlteiler 15 reflektierte Laserstrahl 3 auf einen zweiten Polarisations-Strahlteiler **17b,** durchläuft aber vorher eine polarisationsdrehende Einrichtung in Form einer λ/2-Verzögerungsplatte **19,** welche den Polarisationszustand des Laserstrahls 3 um 45° dreht. Die Intensität I₃ des an dem zweiten Polarisations-Strahlteiler 17b reflektierten Strahlungsanteils, dessen Polarisationsrichtung einen Polarisations-Winkel von 45° aufweist, wird von einem dritten Detektor **18c** detektiert. Entsprechend wird die Intensität I₄ des von dem zweiten Polarisations-Strahlteiler 17b transmittierten Strahlungsanteils, dessen Polarisationsrichtung einen Polarisations-Winkel von 135° aufweist, von dem vierten Detektor **18d** erfasst. Mit Hilfe der vier Detektoren 18a-d werden somit vier polarisationsabhängige Intensitätssignale I₁ bis I₄ erfasst.

Bei den optischen Detektoren 18a-d handelt es sich im gezeigten Beispiel um Fotodioden, genauer gesagt um PIN-Dioden, welche eine Abtastung im GHz-Bereich ermöglichen. Bei dem in Fig. 1a gezeigten Beispiel sind die Detektoren 18a-d in Form der PIN-Dioden als Freistrahl-Dioden ausgeführt. Die Analysator-Optik 14 weist Fokussierlinsen zur Fokussierung der vier linear polarisierten Anteile des Laserstrahls 3 auf eine jeweilige PIN-Diode 18a-d auf. Alternativ können die optischen Detektoren 18a-d z.B. als fasergekoppelte PIN-Dioden ausgebildet sein. Die optischen Detektoren 18a-d können auf die Wellenlänge des Laserstrahls 3 abgestimmt bzw. für diese optimiert sein. Eine solche Optimierung ist aber nicht zwingend erforderlich, da herkömmliche Halbleiter-Detektoren 18a-d aus Si, InGaAs oder Ge den oben angegebenen Wellenlängen-Bereich gut abdecken. Die Intensitätssignale I₁, I₂, I₃, I₄ werden mittels einer Auswerteeinrichtung **20** ausgewertet, wie weiter unten näher beschrieben wird.

Im gezeigten Beispiel ist der Sender 2 durch ein Gehäuse **23** gegenüber der Umgebung abgeschirmt. Entsprechend ist auch der Empfänger 4 durch ein Gehäuse **24** gegen die Umgebung abgeschirmt. Für den Austritt des Laserstrahls 3 ist an dem Gehäuse 23 des Senders 2 ein Austrittsfenster **21a** gebildet. Am Gehäuse 24 des Empfängers 4 ist entsprechend ein Eintrittsfenster **21b** zum Eintritt des Laserstrahls 3 in den Empfänger 4 nach dem Durchlaufen des Messbereichs 10 gebildet. Der Empfänger 4 weist ein Auskoppelfenster **21c** auf, durch das ein Strahlungsanteil des Laserstrahls 3, der von dem ersten geometrischen Strahlteiler 13 transmittiert wird, aus dem Empfänger 4 auf einen ortsauflösenden Detektor in Form einer Kamera **22** ausgekoppelt wird. Die Kamera 22 dient zur Prozessbeobachtung und kann beispielsweise dazu verwendet werden, die Ausrichtung der Partikel P bzw. des Partikelstroms relativ zur Fokusebene 9 zu erkennen sowie ggf. zu korrigieren. Die Fenster 21a-c ermöglichen es, den Sender 2 und den Empfänger 4 gegenüber der Umgebung abzuschirmen, so dass die Sensoranordnung 1 zur Detektion von unterschiedlichen flüssigen, gasförmigen oder festen Medien verwendet werden kann.

Der Sender 2 und der Empfänger 4 sind für die Ausrichtung relativ zueinander an einem Rahmen **25** befestigt. Der Rahmen 25 hält den Sender 2 und den Empfänger 4 in einem konstanten Abstand und einer konstanten Winkelausrichtung zueinander und ermöglicht eine koaxiale Ausrichtung der optischen Achse des Senders 2 und des Empfängers 4. Alternativ zum gezeigten Beispiel ist es möglich, den Sender 2 und den Empfänger 4 lösbar miteinander zu verbinden, z.B. mittels einer Steckverbindung. Es ist ebenfalls möglich, den Sender 2 und den Empfänger 4 nicht miteinander zu verbinden, diese aber initial zueinander auszurichten (passive Ausrichtung) oder mittels einer aktiven Strahl-Stabilisierung relativ zueinander auszurichten (aktive Ausrichtung). In letzterem Fall wird die Ausrichtung des Senders 2 und des Empfängers 4 relativ zueinander mit Hilfe einer aktiven Laserstrahlstabilisierung aufrechterhalten. Zu diesem Zweck kann beispielsweise das von der Kamera 22 erzeugte Signal verwendet werden, das als Stabilitäts-Kriterium für die Ausrichtung des Senders 2 und des Empfängers 4 relativ zueinander dient. Auch das Summen-Signal I₁+I₂+I₃+I₄ von allen Detektoren 18a-d kann - eine ausreichend lange Integrationszeit vorausgesetzt - als Stabilitäts-Kriterium dienen.

Zur Charakterisierung der Partikel P wird in der Auswerteeinrichtung 20 aus den polarisationsabhängigen Intensitäten I₁, I₂ des ersten und des zweiten Detektors 18a,b ein Summen-Signal I₁ + I₂ und ein Differenz-Signal I₁ - I₂ gebildet, welche dem Stokes-Parameter s₀ bzw. dem Stokes-Parameter s₁ entsprechen. Entsprechend wird aus den an dem dritten und vierten Detektor 18c,d ermittelten polarisationsabhängigen Intensitäten I₃, I₄ ein weiteres Summen-Signal I₃ + I₄ und ein weiteres Differenz-Signal I₃ - I₄ gebildet. Das weitere Differenz-Signal I₃ - I₄ entspricht hierbei dem Stokes-Parameter s₂. Die Bildung der jeweiligen Summensignale I₁ + I₂, I₃ + I₄ bzw. der jeweiligen Differenzsignale I₁ - I₂, I₃ - I₄ kann in der Auswerteeinrichtung 20 mit Hilfe von passiven elektronischen Bauelementen erfolgen, beispielsweise mit Hilfe von Richtkopplern, oder mit Hilfe von aktiven Bauelementen, z.B. mit Hilfe von Operationsverstärkern. Die Geschwindigkeit der Auslese-Elektronik der Auswerteeinrichtung 20 ist an die Bandbreite der Detektoren 18a-d angepasst.

Die Auswerteeinrichtung 20 ist ausgebildet, anhand des Summen-Signals s₀ (bzw. I₁ + I₂) die Partikel-Größe D zu berechnen. Hierbei wird ausgenutzt, dass das Summen-Signal s₀ proportional zur Gesamt-Intensität des Laserstrahls 3 ist, welcher den Messbereich 10 durchlaufen hat. Wird der Messbereich 10 teilweise oder ggf. ganz von einem Partikel P überdeckt, reduziert sich die Gesamt-Intensität des Laserstrahls 3 und somit auch der Wert des Summen-Signals s₀. Entsprechend kann auch das weitere Summen-Signal I₃ + I₄ ausgewertet werden, um die Partikel-Größe D zu berechnen. Anhand des Werts des Summen-Signals s₀ können die Partikel P auch in ihrer Größe klassifiziert werden, beispielsweise indem der Wert des Summen-Signals s₀ z.B. mit Hilfe von Komparatoren mit unterschiedlich großen Schwellwerten verglichen wird, die einer jeweiligen Größen-Klasse der Partikel P zugeordnet sind.

Die Auswerteeinrichtung 20 ist auch ausgebildet, anhand des Differenz-Signals s₁ und anhand des weiteren Differenz-Signals s₂ die Partikel-Position Pₓ, P_{Y} des Partikels P in der Fokusebene 9 zu bestimmen. Gegebenenfalls kann zusätzlich das Summen-Signal s₀ (oder das weitere Summen-Signal I₃ - I₄) zu diesem Zweck herangezogen werden. Für die Positions-Bestimmung kann die Auswerteeinrichtung 20 beispielsweise eine Tabelle oder dergleichen aufweisen, die jeder Kombination s₁, s₂ oder ggf. jeder Kombination s₀, s₁, s₂ eine Position P_{X}, P_{Y} in dem Messbereich 10 zuordnet. Anhand eines zeitlichen Verlaufs der Differenz-Signale s₁, s₂ kann die Trajektorie des Partikels P in dem Messbereich 10 bestimmt werden. Anhand des zeitlichen Verlaufs der Differenz-Signale s₁, s₂ können zudem auch eine Partikel-Geschwindigkeit vₓ, v_{Y} sowie eine Partikel-Beschleunigung a_{X}, a_{Y} an der jeweiligen Partikel-Position Pₓ, P_{Y} in der Fokusebene 9 bestimmt werden.

Da für die Charakterisierung der Partikel P Summen bzw. Differenzen aus den jeweiligen polarisationsabhängigen Intensitätssignalen I₁, I₂, I₃, I₄ berechnet werden, ist es erforderlich, dass es nicht zu einem zeitlichen Versatz bzw. zu einer LaufzeitDifferenz zu den vier Detektoren 18a-d in der Analysator-Optik 14 kommt. Um dies zu verhindern, ist die Analysator-Optik 14 so ausgebildet, dass die optische Weglänge von dem Strahlteiler 15, welcher den Laserstrahl 3 auf den ersten und zweiten Detektions-Strahlengang 16a,b aufteilt, zu den vier Detektoren 18a-d jeweils gleich lang ist.

**Fig. 1b** zeigt eine Sensoranordnung 1, die den Sender 2 und den Empfänger 4 von Fig.1a sowie einen weiteren Sender 2a und einen weiteren Empfänger 4a aufweist, die baugleich zu dem Sender 2 und dem Empfänger 4 von Fig. 1a sind. Der weitere Sender 2a umfasst eine weitere (nicht gezeigte) Fokussiereinrichtung zur Fokussierung eines weiteren Laserstrahls 3a in einer weiteren Fokusebene 9a, die senkrecht zur Fokusebene 9 von Fig. 1 ausgerichtet ist. Die Fokusebene 9 und die weitere Fokusebene 9a kreuzen sich in dem Messbereich 10. Eine nicht bildlich dargestellte weitere Auswerte-Optik des weiteren Empfängers 4a ermöglicht die Bestimmung der Partikel-Position P_{X}, P_{Z}, der Partikel-Geschwindigkeit vₓ, v_{z} sowie der Partikel-Beschleunigung aₓ, a_{Z} von Partikeln P in der weiteren Fokusebene 9a. Da die beiden Fokusebenen 9, 9a sich in einem linienförmigen, in X-Richtung verlaufenden Abschnitt des Messbereichs 10 kreuzen, kann die Auswerteeinrichtung 20 die zusätzlichen Informationen nutzen, um die Partikel-Position P_{X}, P_{Y}, P_{Z}, die Partikel-Geschwindigkeit vₓ, v_{Y}, v_{z} sowie die Partikel-Beschleunigung aₓ, a_{Y}, a_{Z} von Partikeln P, welche den Messbereich 10 durchlaufen, in allen drei Raumrichtungen X, Y, Z zu bestimmen. Entsprechend kann die Auswerteeinrichtung 20 auch die Partikel-Größe Dₓ, D_{Y}, D_{Z} in allen drei Raumrichtungen X, Y, Z bestimmen.

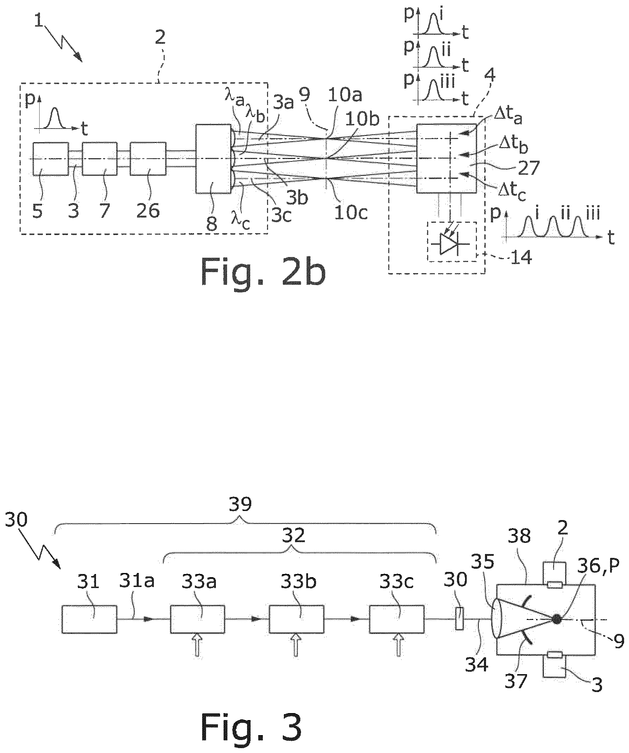

Die in **Fig. 2a****,****b** gezeigten Sensoranordnungen 1 unterscheiden sich von den in Fig. 1a,b gezeigten Sensoranordnungen 1 im Wesentlichen dadurch, dass nicht ein Messbereich 10 in der Fokusebene 9 erzeugt wird, sondern eine Mehrzahl von Messbereichen, von denen beispielhaft drei Messbereiche 10a-c dargestellt sind. Um die Mehrzahl von Messbereichen 10a-c zu erzeugen, ist im Strahlweg nach der Moden-Konversionseinrichtung 7 eine Strahlteiler-Einrichtung **26** angeordnet, welche den Laserstrahl 3 auf eine entsprechende Mehrzahl von Teilstrahlen aufteilt, von denen in Fig. 2a,b beispielhaft drei Teilstrahlen 3a-c dargestellt sind. Die drei Teilstrahlen 3a-c werden von der geeignet modifizierten Fokussieroptik 8 in drei Messbereichen 8a-c fokussiert, die in der Fokusebene 9 voneinander beabstandet angeordnet sind. In der Regel sind die Messbereiche 8a-c, ... in einer regelmäßigen Anordnung (einem Mess-Raster) in der Fokusebene 9 angeordnet. Durch die Aufteilung des Laserstrahls 3 auf mehrere Teilstrahlen 3a-c kann der mit Hilfe der Sensoranordnung 1 überwachbare Bereich in der Fokusebene 9 deutlich vergrößert werden.

Die Laserquelle 5 der in Fig. 2a,b gezeigten Sensoranordnungen 1 wird gepulst betrieben, d.h. diese ist zur Erzeugung von Laserpulsen bzw. eines gepulsten Laserstrahls 3 ausgebildet. Die an der Strahlteiler-Einrichtung bzw. -Optik erzeugten Teilstrahlen 3a-c, welche die drei Messbereiche 10a-c durchlaufen, sind daher ebenfalls gepulst, wenn diese in den Empfänger 4 eintreten. Der Empfänger 4 weist eine Verzögerungseinrichtung **27** auf, um die Teilstrahlen 3a-c mit jeweils unterschiedlichen Verzögerungsdauern **Δtₐ**, **Δt_{b}**, **Δt_{c}** zu verzögern, so dass diese zeitlich versetzt in die Analysator-Optik 14 eintreten und die Intensitätssignale I₁, I₂, I₃, I₄, die unterschiedlichen Messbereichen 10a-c zugeordnet sind, zeitlich versetzt auf die Detektoren 18a-d treffen. Auf diese Weise kann ein zeitliches Multiplexing durchgeführt werden, so dass die Auswertung der Intensitätssignale I₁, I₂, I₃, I₄, die unterschiedlichen Messbereichen 10a-c zugeordnet sind, zeitlich aufeinander folgend durchgeführt werden kann. Gegebenenfalls kann einer der Teilstrahlen 3a-c als Trigger-Signal für die Auswertung in der Auswerteeinrichtung 20 verwendet werden, wenn der jeweilige Teilstrahl 3a-c eindeutig identifizierbare (unveränderliche) Intensitätssignale I₁, I₂, I₃, I₄, erzeugt. Dies kann beispielsweise erreicht werden, wenn der jeweilige Teilstrahl 3a-c obskuriert wird, beispielsweise indem einer der Messbereiche 10a-c den entsprechenden Teilstrahl 3a-c im Wesentlichen absorbiert.

Für die Realisierung der Strahlteiler-Einrichtung 26 sowie der Verzögerungseinrichtung 27 bestehen unterschiedliche Möglichkeiten: Bei dem in Fig. 2a gezeigten Beispiel ist die Strahlteiler-Einrichtung 26 als diffraktives optisches Element (Beugungs-Gitter) ausgebildet und dient zur Erzeugung einer Mehrzahl von Teilstrahlen 3a-c mit unterschiedlichen Wellenlängen λₐ, λ_{b}, λ_{c}. Entsprechend ist die Verzögerungseinrichtung 27 als diffraktives optisches Element, z.B. als Reflexions- oder als Transmissionsgitter, oder als dispersives optisches Element zum Verzögern der Teilstrahlen 3a-c mit den unterschiedlichen Wellenlängen λₐ, λ_{b}, λ_{c}, ... mit jeweils unterschiedlicher Verzögerungsdauer Δtₐ, Δt_{b}, Δt_{c} ausgebildet.

Bei dem in Fig. 2b gezeigten Beispiel weist die Strahlteiler-Einrichtung 26 mindestens ein Mikrolinsen-Array zur Erzeugung der Mehrzahl von Teilstrahlen 3a-c mit gleichen Wellenlängen λₐ, λ_{b}, λ_{c} auf. Für die Erzeugung einer rasterförmigen Anordnung von Messbereichen 10a-c in der Fokusebene 9 kann die Strahlteiler-Einrichtung 26 beispielsweise Zylinderlinsen-Arrays aufweisen. Alternativ oder zusätzlich zu Mikrolinsen-Arrays kann auch ein diffraktives optisches Element in der Strahlteiler-Einrichtung 26 verwendet werden, welches mehrere Teilstrahlen 3a-c mit im Wesentlichen gleichen Wellenlängen λₐ, λ_{b}, λ_{c} erzeugt. Die Verzögerungseinrichtung 27 weist in diesem Fall typischerweise mindestens ein dispersives optisches Element, beispielsweise in Form einer Glasplatte oder einer Keilplatte, auf.

Wie in Fig. 2b angedeutet ist, kann die Fokussieroptik 8 in diesem Fall eine Mehrzahl von Fokussierlinsen aufweisen, um die jeweiligen Teilstrahlen 3a-c auf die Messbereiche 10a-c zu fokussieren. Grundsätzlich können sowohl die Fokussieroptik 8 als auch die in Fig. 2a,b nicht dargestellte Kollimationsoptik 12 sphärische, asphärische, achromatische Linsen, gekreuzte Zylinderlinsen oder GRIN-Linsen aufweisen. Es versteht sich, dass die Fokussieroptik 8 und die Kollmationsoptik 12 alternativ oder zusätzlich zu transmittierenden optischen Elementen auch reflektierende optische Elemente aufweisen können.

Die in Zusammenhang mit Fig. 1a,b und Fig. 2a,b beschriebene Sensoranordnung 1 kann zur Charakterisierung von Partikeln P in einer Vielzahl von unterschiedlichen Anwendungen eingesetzt werden. Nachfolgend wird beispielhaft anhand von **Fig. 3** eine solche Anwendung anhand einer EUV-Strahlungserzeugungsvorrichtung **30** näher beschrieben. Die EUV-Strahlungserzeugungsvorrichtung 30 umfasst eine Strahlquelle **31,** eine Verstärkeranordnung **32** mit drei optischen Verstärkern bzw. Verstärkerstufen **33a-c,** eine nicht näher dargestellte Strahlführungseinrichtung **34** sowie eine Fokussiereinrichtung **35.** Die Fokussiereinrichtung 35 dient dazu, einen von der Strahlquelle 31 erzeugten und von den Verstärkeranordnung 32 verstärkten Treiber-Laserstrahl **31a** an einem Zielbereich **36** in einer Vakuum-Kammer **38** zu fokussieren, in der Partikel P eingebracht sind. Die Partikel P bzw. ein einzelner Zinn-Tropfen, dient als Target-Material und wird mittels des Treiber-Laserstrahls 31a bestrahlt. Der Zinn-Tropfen geht hierbei in einen Plasma-Zustand über und emittiert EUV-Strahlung, die mittels eines Kollektorspiegels **37** fokussiert wird. Bei dem in Fig. 3 gezeigten Beispiel weist der Kollektorspiegel 37 eine Öffnung zum Durchtritt des Laserstrahls 31a auf. Die Strahlquelle 31 weist im gezeigten Beispiel zwei CO₂-Laser auf, um einen Vor-Puls und einen Haupt-Puls zu erzeugen, die gemeinsam in der Verstärkeranordnung 32 verstärkt und auf den Zielbereich 36 fokussiert werden. Die Strahlquelle 31 bildet gemeinsam mit der Verstärkeranordnung 32 eine Treiberlaseranordnung **39** der EUV-Strahlungserzeugungsvorrichtung 30.

Wie in Fig. 3 ebenfalls zu erkennen ist, sind an der Vakuum-Kammer 38 der Sender 2 und der Empfänger 4 der Sensoranordnung 1 angebracht. Die Fokusebene 9, in welcher der bzw. die Messbereiche 10, 10a-c gebildet sind, verläuft durch den Zielbereich 36 mit den Partikeln P in Form von Zinn-Tröpfchen. Mit Hilfe der Sensoranordnung 1 können die Partikel P bzw. deren Bewegung zu dem Zielbereich 36 untersucht und deren Bewegung bzw. Trajektorie bestimmt werden. Auch die Größe der Partikel P bzw. die Größe von beim Zerstäuben eines jeweiligen Zinn-Tröpfchens durch den Treiber-Laserstrahls 31a erzeugten, kleineren Partikeln kann mit Hilfe der Sensoranordnung 1 bestimmt werden. Auch die Trajektorien bzw. die Geschwindigkeit der beim Zerstäuben erzeugten Partikel P kann mittels der Sensoranordnung 1 detektiert werden.

## Patentansprüche

1. Sensoranordnung (1) zur Charakterisierung von Partikeln (P), insbesondere zur Bestimmung einer Partikel-Position (P_{X}, P_{Y}), einer Partikel-Geschwindigkeit (v_{X}, v_{Y}), einer Partikel-Beschleunigung (a_{X}, a_{Y}) und/oder einer Partikel-Größe (D), umfassend:
einen Sender (2) mit:
einer Laserquelle (5) zur Erzeugung eines Laserstrahls (3),
einer Fokussieroptik (8) zur Fokussierung einer Feldverteilung (11) des Laserstrahls (3) auf mindestens einen Messbereich (10; 10a-c) in einer Fokusebene (9), der von den Partikeln (P) durchlaufen wird, sowie einen Empfänger (4),
**dadurch gekennzeichnet,**
**dass** der Sender (2) eine Moden-Konversionseinrichtung (7) zur Erzeugung der Feldverteilung (11, 11a) des Laserstrahls (3) umfasst, die an jeder Position (X, Y) eine unterschiedliche Kombination einer lokalen Intensität (I(X, Y)) und einer lokalen Polarisationsrichtung (R(X, Y)) des Laserstrahls (3) aufweist, und
**dass** der Empfänger (4) eine Analysator-Optik (14) zur Ermittlung von polarisationsabhängigen Intensitätssignalen (I₁, I₂, I₃, I₄) der Feldverteilung (11, 11a) des Laserstrahls (3) in dem mindestens einen Messbereich (10; 10a-c), sowie
eine Auswerteeinrichtung (20) zur Charakterisierung der Partikel (P), insbesondere zur Bestimmung der Partikel-Position (P_{X}, P_{Y}), der Partikel-Geschwindigkeit (v_{X}, v_{Y}), der Partikel-Beschleunigung (a_{X}, a_{Y}) und/oder der Partikel-Größe (D), anhand der polarisationsabhängigen Intensitätssignale (I₁, I₂, I₃, I₄) umfasst.

2. Sensoranordnung nach Anspruch 1, bei welcher die Moden-Konversionseinrichtung (7) zur Erzeugung einer Feldverteilung (11) mit radialsymmetrischer Polarisationsrichtung (R(X, Y)) oder zur Erzeugung einer Feldverteilung (11a) mit linienförmig konstanter Polarisationsrichtung (R(X, Y)) ausgebildet ist und/oder bei welcher die Moden-Konversionseinrichtung (7) als Phasenplatte, als diffraktives optisches Element, als photonische Kristallfaser oder als Flüssigkristall ausgebildet ist.

3. Sensoranordnung nach Anspruch 1 oder 2, bei welcher die Laserquelle (5) zur Erzeugung eines gepulsten Laserstrahls (3), bevorzugt mit einer Pulsdauer von weniger als 1 ns, ausgebildet ist.

4. Sensoranordnung nach einem der vorhergehenden Ansprüche bei welcher der Sender (2) eine im Strahlweg nach der Moden-Konversionseinrichtung (7) angeordnete Strahlteiler-Einrichtung (26) zur Aufteilung des Laserstrahls (3) auf eine Mehrzahl von Teilstrahlen (3a-c) mit der von der Moden-Konversionseinrichtung (7) erzeugten Feldverteilung (11, 11a) aufweist, und bei welcher die Fokussieroptik (8) zur Fokussierung der Mehrzahl von Teilstrahlen (3a-c) in einer Mehrzahl von Messbereichen (10a-c) in der Fokusebene (9) ausgebildet ist, wobei der Empfänger (4) bevorzugt eine Verzögerungseinrichtung (27) zum Verzögern der Mehrzahl von Teilstrahlen (3a-c) mit jeweils unterschiedlicher Verzögerungsdauer (Δtₐ, Δt_{b}, Δt_{c}) aufweist.

5. Sensoranordnung nach Anspruch 4, bei welcher die Strahlteiler-Einrichtung (26) ein diffraktives optisches Element und/oder mindestens ein Mikrolinsen-Array zur Erzeugung der Mehrzahl von Teilstrahlen (3a-c) mit gleichen Wellenlängen (λₐ, λ_{b}, λ_{c}) aufweist.

6. Sensoranordnung nach Anspruch 4, bei welcher die Strahlteiler-Einrichtung (26) ein diffraktives optisches Element zur Erzeugung der Mehrzahl von Teilstrahlen mit unterschiedlichen Wellenlängen (λₐ, λ_{b}, λ_{c}) aufweist, wobei bevorzugt die Verzögerungseinrichtung (27) ein diffraktives oder dispersives optisches Element zum Verzögern der Teilstrahlen (3a-c) mit unterschiedlichen Wellenlängen (λ₁, λ₂, λ₃, ...) mit jeweils unterschiedlicher Verzögerungsdauer (Δtₐ, Δt_{b}, Δt_{c}) aufweist.

7. Sensoranordnung nach einem der vorhergehenden Ansprüche, bei welcher die Analysator-Optik (14) einen Strahlteiler (15) zur Aufteilung des Strahlengangs der Analysator-Optik (14) auf einen ersten und zweiten Detektions-Strahlengang (16a, 16b) umfasst.

8. Sensoranordnung nach Anspruch 7, bei welcher der erste Detektions-Strahlengang (16a) einen ersten Polarisations-Strahlteiler (17a) sowie einen ersten und zweiten optischen Detektor (18a, 18b) umfasst, und bei welcher der zweite Detektions-Strahlengang (16b) einen zweiten Polarisations-Strahlteiler (17b) sowie einen dritten und vierten optischen Detektor (18c, 18d) umfasst, wobei bevorzugt eine optische Weglänge von dem Strahlteiler (15) der Analysator-Optik (14) zu dem ersten bis vierten optischen Detektor (18a-d) gleich groß ist.

9. Sensoranordnung nach Anspruch 8, bei dem die Analysator-Optik (14) eine polarisationsdrehende Einrichtung (19) zur Drehung einer Polarisationsrichtung des Laserstrahls (3) um 45° entweder vor dem ersten Polarisations-Strahlteiler (17a) oder vor dem zweiten Polarisations-Strahlteiler (17b) aufweist.

10. Sensoranordnung nach einem der Ansprüche 8 oder 9, bei dem die Auswerteeinrichtung (20) zur Bildung eines Summen-Signals (I₁ + I₂) und/oder eines Differenz-Signals (I₁ - I₂) aus den ermittelten polarisationsabhängigen Intensitäten (I₁, I₂) des ersten und zweiten Detektors (18a,b) und/oder zur Bildung eines weiteren Summen-Signals (I₃ + I₄) und/oder eines weiteren Differenz-Signals (I₃ - I₄) aus den ermittelten polarisationsabhängigen Intensitäten (I₃, I₄) des dritten und vierten Detektors (18c,d) ausgebildet ist, wobei die Auswerteeinrichtung (20) bevorzugt ausgebildet ist, aus dem Summen-Signal (I₁ + I₂) und/oder aus dem weiteren Summen-Signal (I₃ + I₄) die Partikel-Größe (D) zu berechnen und/oder wobei die Auswerteeinrichtung (20) bevorzugt ausgebildet ist, anhand des Differenz-Signals (I₁ - I₂) und/oder anhand des weiteren Differenz-Signals (I₃ - I₄) die Partikel-Position (Pₓ, P_{Y}) und/oder die Partikel-Geschwindigkeit (v_{X}, v_{Y}) und/oder der Partikel-Beschleunigung (a_{X}, a_{Y}) in der Fokusebene (20) zu berechnen.

11. Sensoranordnung nach einem der vorhergehenden Ansprüche, weiter umfassend: einen weiteren Sender (2a) zur Fokussierung eines weiteren Laserstrahls (3a) in einer weiteren Fokusebene (9a), welche die Fokusebene (9) in dem Messbereich (10) kreuzt, sowie einen weiteren Empfänger (4a) zum Empfangen des weiteren Laserstrahls (3a), wobei die Auswerteeinrichtung (20) zur Bestimmung einer Partikel-Position (P_{X}, P_{Y}, P_{Z}), einer Partikel-Geschwindigkeit (v_{X}, v_{Y}, v_{Z}), einer Partikel-Beschleunigung (a_{X}, a_{Y}, a_{Z}) und/oder einer Partikel-Größe (D_{X}, D_{Y}, D_{Z}) in drei Raumrichtungen (X, Y, Z) ausgebildet ist.

12. Sensoranordnung nach einem der vorhergehenden Ansprüche, bei dem der Sender (2) ein Gehäuse (23) mit einem Austrittsfenster (21a) aufweist und bei dem der Empfänger (4) ein Gehäuse (24) mit einem Eintrittsfenster (21b) aufweist, zwischen denen die Fokusebene (9) gebildet ist.

13. Sensoranordnung nach einem der vorhergehenden Ansprüche, bei welcher entweder der Sender (2) und der Empfänger (4) fest miteinander verbunden sind oder bei welcher der Sender (2) und der Empfänger (4) nicht fest miteinander verbunden sind, wobei bevorzugt eine optische Verbindung zwischen dem Sender (2) und dem Empfänger (4) mittels aktiver Laserstrahlstabilisierung aufrechterhalten wird.

14. Sensoranordnung nach einem der vorhergehenden Ansprüche, bei welcher der Empfänger (4) einen weiteren Strahlteiler (13) zum Auskoppeln eines Strahlungsanteils des Laserstrahls (3) auf einen ortsauflösenden Detektor, insbesondere auf eine Kamera (22), aufweist.

15. Optische Anordnung, insbesondere für eine EUV-Strahlungserzeugungsvorrichtung (30), umfassend:
eine Vakuum-Kammer (38), der Partikel (P) in einen Zielbereich (36) zuführbar sind, sowie
eine Sensoranordnung (1) nach einem der vorhergehenden Ansprüche zur Charakterisierung der Partikel (P) in der Vakuum-Kammer (38).

## Claims

1. A sensor assembly (1) for characterising particles (P), in particular for determining a particle position (P_{X}, P_{Y}), a particle speed (v_{X}, v_{Y}), a particle acceleration (a_{X}, a_{Y}) and/or a particle size (D) comprising:
a transmitter (2) having:
a laser source (5) for generating a laser beam (3),
a focusing optical unit (8) for focusing a field distribution (11) of the laser beam (3) onto at least one measuring region (10; 10a-c) in a focal plane (9) through which the particles (P) pass, and a receiver (4),
**characterised in that**,
the transmitter (2) comprises a mode conversion device (7) for generating the field distribution (11, 11a) of the laser beam (3), which has a different combination of a local intensity (I(X, Y)) and a local polarisation direction (R(X, Y)) of the laser beam (3) at each position (X, Y), and that the receiver (4) has an analyser optical unit (14) for determining polarisation-dependent intensity signals (I₁, I₂, I₃, I₄) of the field distribution (11, 11a) of the laser beam (3) in the at least one measuring region (10; 10a-c), and
comprises an evaluation device (20) for characterising the particles (P), in particular for determining the particle position (P_{X}, P_{Y}), the particle speed (v_{X}, v_{Y}), the particle acceleration (a_{X}, a_{Y}) and/or the particle size (D) on the basis of the polarisation-dependent intensity signals (I₁, I₂, I₃, I₄).

2. The sensor assembly according to claim 1, in which the mode conversion device (7) is designed to generate a field distribution (11) with a radially symmetrical polarisation direction (R(X, Y)) or to generate a field distribution (11a) with a linear constant polarisation direction (R(X, Y)) and/or in which the mode conversion device (7) is designed as a phase plate, as a diffractive optical element, as a photonic crystal fibre or as a liquid crystal.

3. The sensor assembly according to claim 1 or 2, in which the laser source (5) is designed to generate a pulsed laser beam (3), preferably with a pulse duration of less than 1 ns.

4. The sensor assembly according to any one of the preceding claims, in which the transmitter (2) has a beam splitter device (26), arranged in the beam path after the mode conversion device (7), for splitting the laser beam (3) into a plurality of partial beams (3a-c) with the field distribution (11, 11a) generated by the mode conversion device (7), and in which the focusing optical unit (8) is designed to focus the plurality of partial beams (3a-c) in a plurality of measuring regions (10a-c) in the focal plane (9), wherein the receiver (4) preferably has a delay device (27) for delaying the plurality of partial beams (3a-c), with each having a different delay duration (Δtₐ, Δt_{b}, Δt_{c}).

5. The sensor assembly according to claim 4, in which the beam splitter device (26) has a diffractive optical element and/or at least one microlens array for generating the plurality of partial beams (3a-c) with the same wavelengths (λₐ, λ_{b}, λ_{c}).

6. The sensor assembly according to claim 4, in which the beam splitter device (26) comprises a diffractive optical element for generating the plurality of partial beams with different wavelengths (λₐ, λ_{b}, λ_{c}), wherein the delay device (27) preferably has a diffractive or dispersive optical element for delaying the partial beams (3a-c) with different wavelengths (λ₁, λ₂, λ₃,...) with each having a different delay duration (Δtₐ, Δt_{b}, Δt_{c}).

7. The sensor assembly according to any one of the preceding claims, in which the analyser optical unit (14) comprises a beam splitter (15) for splitting the beam path of the analyser optical unit (14) into a first and second detection beam path (16a, 16b).

8. The sensor assembly according to claim 7, in which the first detection beam path (16a) comprises a first polarisation beam splitter (17a) and a first and second optical detector (18a, 18b), and in which the second detection beam path (16b) comprises a second polarisation beam splitter (17b) and a third and fourth optical detector (18c, 18d), wherein preferably an optical path length from the beam splitter (15) of the analyser optical unit (14) to the first to fourth optical detectors (18a-d) is the same size.

9. The sensor assembly according to claim 8, in which the analyser optical unit (14) has a polarisation-rotating device (19) for rotating a polarisation direction of the laser beam (3) by 45° either in front of the first polarisation beam splitter (17a) or in front of the second polarisation beam splitter (17b).

10. The sensor assembly according to any one of claims 8 or 9, in which the evaluation device (20) is designed to form a sum signal (I₁ + I₂) and/or a differential signal (I₁ - I₂) from the ascertained polarisation-dependent intensities (I₁, I₂) of the first and second detector (18a,b) and/or to form a further sum signal (I₃ + I₄) and/or a further differential signal (I₃ - I₄) from the ascertained polarisation-dependent intensities (I₃, I₄) of the third and fourth detectors (18c,d), wherein the evaluation device (20) is preferably designed to calculate the particle size (D) from the sum signal (I₁ + I₂) and/or from the further sum signal (I₃ + I₄) and/or wherein the evaluation device (20) is preferably designed to calculate the particle position (P_{X}, P_{Y}) and/or the particle speed (v_{X}, v_{Y}) and/or the particle acceleration (a_{X}, a_{Y}) in the focal plane (20) on the basis of the differential signal (I₁ - I₂) and/or on the basis of the further differential signal (I₃ - I₄).

11. The sensor assembly according to any one of the preceding claims, further comprising: a further transmitter (2a) for focusing a further laser beam (3a) in a further focal plane (9a) which crosses the focal plane (9) in the measuring region (10), and a further receiver (4a) for receiving the further laser beam (3a), wherein the evaluation device (20) is designed to determine a particle position (P_{X}, P_{Y}, P_{Z}), a particle speed (v_{X}, v_{Y}, v_{Z}), a particle acceleration (a_{X}, a_{Y}, a_{Z}) and/or a particle size (D_{X}, D_{Y}, D_{Z}) in three spatial directions (X, Y, Z).

12. The sensor assembly according to any one of the preceding claims, in which the transmitter (2) comprises a housing (23) having an outlet window (21a) and in which the receiver (4) comprises a housing (24) having an inlet window (21b), between which the focal plane (9) is formed.

13. The sensor assembly according to any one of the preceding claims, in which either the transmitter (2) and the receiver (4) are permanently connected to one another or in which the transmitter (2) and the receiver (4) are not permanently connected to one another, wherein preferably an optical connection is maintained between the transmitter (2) and the receiver (4) by means of active laser beam stabilisation.

14. The sensor assembly according to any one of the preceding claims, in which the receiver (4) has a further beam splitter (13) for decoupling a radiation component of the laser beam (3) onto a spatially resolving detector, in particular onto a camera (22).

15. An optical assembly, in particular for an EUV radiation generation apparatus (30), comprising:
a vacuum chamber (38), to which particles (P) can be fed into a target region (36), and
a sensor assembly (1) according to any one of the preceding claims for characterising the particles (P) in the vacuum chamber (38).

## Revendications

1. Ensemble de capteurs (1) pour caractériser des particules (P), en particulier pour déterminer une position des particules (P_{X}, P_{Y}), une vitesse des particules (v_{X}, v_{Y}), une accélération des particules (a_{X}, a_{Y}) et/ou une granulométrie (D), comprenant :
un émetteur (2) avec :
une source laser (5) pour générer un faisceau laser (3),
une optique de focalisation (8) pour focaliser une répartition de champ (11) du faisceau laser (3) sur au moins une zone de mesure (10 ; 10a-c) dans un plan focal (9) qui est traversé par les particules (P), ainsi qu'un récepteur (4),
**caractérisé en ce que**
l'émetteur (2) comprend un dispositif de conversion de mode (7) pour générer la répartition de champ (11, 11a) du faisceau laser (3), qui, dans chaque position (X, Y), présente une combinaison différente d'une intensité locale (I(X, Y)) et d'une direction de polarisation locale (R(X, Y)) du faisceau laser (3), et **en ce que** le récepteur (4) comprend une optique d'analyseur (14) pour déterminer des signaux d'intensité dépendant de la polarisation (I₁, I₂, I₃, I₄) de la répartition de champ (11, 11a) du faisceau laser (3) dans l'au moins une zone de mesure (10 ; 10a-c),
ainsi qu'un dispositif d'évaluation (20) pour caractériser les particules (P), en particulier pour déterminer la position des particules (P_{X}, P_{Y}), la vitesse des particules (v_{X}, v_{Y}), l'accélération des particules (a_{X}, a_{Y}) et/ou la granulométrie (D), au moyen des signaux d'intensité dépendant de la polarisation (I₁, I₂, I₃, I₄).

2. Ensemble de capteurs selon la revendication 1, dans lequel le dispositif de conversion de mode (7) est conçu pour générer une répartition de champ (11) avec une direction de polarisation à symétrie radiale (R(X, Y)) ou pour générer une répartition de champ (11a) avec une direction de polarisation constante linéaire (R(X, Y)) et/ou dans lequel le dispositif de conversion de mode (7) est conçu sous forme de lame de phase, d'élément optique diffractif, d'une fibre à cristal photonique ou de cristal liquide.

3. Ensemble de capteurs selon la revendication 1 ou 2, dans lequel la source laser (5) est conçue pour générer un faisceau laser pulsé (3), de préférence ayant une durée d'impulsion inférieure à 1 ns.

4. Ensemble de capteurs selon l'une quelconque des revendications précédentes, dans lequel l'émetteur (2) présente un dispositif diviseur de faisceau (26) agencé dans le chemin de faisceau après le dispositif de conversion de mode (7) pour diviser le faisceau laser (3) en une pluralité de faisceaux partiels (3a-c) avec la répartition de champ (11, 11a) générée par le dispositif de conversion de mode (7), et dans lequel l'optique de focalisation (8) est conçue pour focaliser la pluralité de faisceaux partiels (3a-c) en une pluralité de zones de mesure (10a-c) dans le plan focal (9), le récepteur (4) présentant de préférence un dispositif de retard (27) pour retarder la pluralité de faisceaux partiels (3a-c), chacun ayant un temps de retard (Δtₐ, Δt_{b}, Δt_{c}) différent.

5. Ensemble de capteurs selon la revendication 4, dans lequel le dispositif diviseur de faisceau (26) présente un élément optique diffractif et/ou au moins un réseau de microlentilles pour générer la pluralité de faisceaux partiels (3a-c) ayant les mêmes longueurs d'onde (λₐ, λ_{b}, λ_{c}).

6. Ensemble de capteurs selon la revendication 4, dans lequel le dispositif diviseur de faisceau (26) présente un élément optique diffractif pour générer la pluralité de faisceaux partiels ayant différentes longueurs d'onde (λₐ, λ_{b}, λ_{c}), le dispositif de retard (27) présentant de préférence un élément optique diffractif ou dispersif pour retarder les faisceaux partiels (3a-c) ayant différentes longueurs d'onde (λ₁, λ₂, λ₃,...), chacun ayant un temps de retard (Δtₐ, Δt_{b}, Δt_{c}) différent.

7. Ensemble de capteurs selon l'une quelconque des revendications précédentes, dans lequel l'optique d'analyseur (14) comprend un séparateur de faisceau (15) pour diviser le chemin de faisceau de l'optique d'analyseur (14) en un premier et en un second chemin de faisceau de détection (16a, 16b).

8. Ensemble de capteurs selon la revendication 7, dans lequel le premier chemin de faisceau de détection (16a) comprend un premier séparateur de faisceau de polarisation (17a) ainsi qu'un premier et un deuxième détecteur optique (18a, 18b), et dans lequel le second chemin de faisceau de détection (16b) comprend un second séparateur de faisceau de polarisation (17b) ainsi qu'un troisième et un quatrième détecteur optique (18c, 18d), de préférence une longueur de chemin optique du séparateur de faisceau (15) de l'optique d'analyseur (14) jusqu'aux premier à quatrième détecteurs optiques (18a-d) présente la même taille.

9. Ensemble de capteurs selon la revendication 8, dans lequel l'optique d'analyseur (14) présente un dispositif de rotation de polarisation (19) pour faire tourner une direction de polarisation du faisceau laser (3) de 45° soit devant le premier diviseur de faisceau de polarisation (17a), soit devant le second diviseur de faisceau de polarisation (17b).

10. Ensemble de capteurs selon l'une quelconque des revendications 8 ou 9, dans lequel le dispositif d'évaluation (20) est conçu pour former un signal de somme (I₁ + I₂) et/ou un signal différentiel (I₁ - I₂) à partir des intensités dépendant de la polarisation déterminées (I₁, I₂) du premier et du deuxième détecteur (18a,b) et/ou pour former un autre signal de somme (I₃ + I₄) et/ou un autre signal différentiel (I₃ - I₄) à partir des intensités dépendant de la polarisation déterminées (I₃, I₄) des troisième et quatrième détecteurs (18c,d), le dispositif d'évaluation (20) étant de préférence conçu pour calculer, à partir du signal de somme (I₁ + I₂) et/ou de l'autre signal de somme (I₃ + I₄), la granulométrie (D) et/ou le dispositif d'évaluation (20) étant de préférence conçu pour calculer, au moyen du signal différentiel (I₁ - I₂) et/ou au moyen de l'autre signal différentiel (I₃ - I₄), la position des particules (P_{X}, P_{Y}) et/ou la vitesse des particules (v_{X}, v_{Y}) et/ou l'accélération des particules (a_{X}, a_{Y}) dans le plan focal (20).

11. Ensemble de capteurs selon l'une quelconque des revendications précédentes, comprenant en outre : un autre émetteur (2a) pour focaliser un autre faisceau laser (3a) dans un autre plan focal (9a) qui croise le plan focal (9) dans la zone de mesure (10), ainsi qu'un autre récepteur (4a) pour recevoir l'autre faisceau laser (3a), le dispositif d'évaluation (20) étant conçu pour déterminer une position des particules (P_{X}, P_{Y}, P_{Z}), une vitesse des particules (v_{X}, v_{Y}, v_{Z}), une accélération des particules (a_{X}, a_{Y}, a_{Z}) et/ou une granulométrie (D_{X}, D_{Y}, D_{Z}) dans trois directions spatiales (X, Y, Z).

12. Ensemble de capteurs selon l'une quelconque des revendications précédentes, dans lequel l'émetteur (2) présente un boîtier (23) doté d'une fenêtre de sortie (21a) et dans lequel le récepteur (4) présente un boîtier (24) doté d'une fenêtre d'entrée (21b), entre lesquelles est formé le plan focal (9).

13. Ensemble de capteurs selon l'une quelconque des revendications précédentes, dans lequel l'émetteur (2) et le récepteur (4) sont fermement reliés l'un à l'autre, ou dans lequel l'émetteur (2) et le récepteur (4) ne sont pas fermement reliés l'un à l'autre, de préférence une liaison optique étant maintenue entre l'émetteur (2) et le récepteur (4) au moyen d'une stabilisation active du faisceau laser.

14. Ensemble de capteurs selon l'une quelconque des revendications précédentes, dans lequel le récepteur (4) présente un autre diviseur de faisceau (13) pour découpler une composante de rayonnement du faisceau laser (3) sur un détecteur à résolution spatiale, en particulier sur une caméra (22).

15. Ensemble optique, en particulier pour un dispositif générateur de rayonnement EUV (30), comprenant :
une chambre à vide (38) dans laquelle des particules (P) peuvent être introduites dans une zone cible (36),
ainsi qu'un ensemble de capteurs (1) selon l'une quelconque des revendications précédentes pour caractériser les particules (P) dans la chambre à vide (38).
